# EUROPÄISCHE PATENTSCHRIFT

(11) **EP 0 895 697 B1**
(45) Veröffentlichungstag und Bekanntmachung des Hinweises auf die Patenterteilung: **01.09.1999**
(21) Anmeldenummer: 97922885.5
(22) Anmeldetag: 22.04.1997
(51) Int. Cl.: H04N 7/50

(54) **VIDEODECODER UND ENTSPRECHENDES VERFAHREN**
VIDEO DECODER AND CORRESPONDING PROCESS
DECODEUR VIDEO ET PROCEDE CORRESPONDANT

(30) Priorität: 23.04.1996 DE 19616201; 29.04.1996 DE 19617171
(43) Veröffentlichungstag der Anmeldung: 10.02.1999
(73) Patentinhaber: SIEMENS AKTIENGESELLSCHAFT, 80333 München (DE)
(72) Erfinder: HEIN, Sören, F-77300 Fontainebleau (FR); MEIER, Wolfgang, D-85658 Egmating (DE); WEHN, Norbert, D-85579 Neubiberg (DE)
(86) Internationale Anmeldenummer: DE9700866
(87) Internationale Veröffentlichungsnummer: WO9740629

(56) Entgegenhaltungen:
- EP-A- 0 600 446
- WO-A-96/06506

## Beschreibung

Die Erfindung betrifft einen Videodecoder und ein entsprechendes Verfahren.

Für die Codierung von Videobildern hat sich der sogenannte MPEG-Standard etabliert, der die Prinzipien der Transformations- und Prädiktionscodierung zur sogenannten Hybridcodierung verbindet. Er sieht drei Arten von codierten Bildern vor, die sich hinsichtlich der Art der Datenkompression unterscheiden:
1. I-Bilder (intracodierte Bilder): Die Codierung eines I-Bildes erfolgt unabhängig von anderen Bildern. Ein I-Bild dient der Synchronisation der Übertragung mehrerer nachfolgender Videobilder und seine Codierung nutzt die Örtliche Korrelation der Bilddaten des I-Bildes. Die Codierung ist vorzugsweise eine Diskrete Cosinus Transformation, DCT, gefolgt von einer Quantisierung und Wichtung der Transformationskoeffizienten mit abschließender Entropiecodierung.
2. P-Bilder (prädizierte Bilder): Ihre Codierung ist abhängig von einem zeitlich vorangegangenen I- oder P-Bild (Vorwärtsprädiktion). P-Bilder werden einer Bewegungsschätzung bezüglich des vorangegangenen Bildes unterworfen (bewegungskomponsierte Prädiktion). Anschließend wird die Intra-Bild-Codierung (z.B. auf die oben für ein I-Bild beschriebene Weise) auf den zeitlichen Prädiktionsfehler angewendet.
3. B-Bilder (bidirektional prädizierte Bilder): Bei diesen findet eine zeitliche bewegungskompensierte Prädiktion sowohl bezüglich eines zeitlich vorangegangenen als auch bezüglich eines zeitlich nachfolgenden P- oder I-Bildes statt. Man spricht auch von "bewegungskompensierter Interpolation". Die Ausdrücke (zeitlich) "nachfolgend" bzw. "vorhergehend" beziehen sich dabei nicht auf die Reihenfolge der Übertragung der Bilder im Datenstrom der codierten Bilder, sondern auf deren Aufnahme-/Wiedergabe-Reihenfolge. Bilder, die Basis einer zeitlichen Prädiktion für die Codierung eines anderen Bildes sind, werden auch als "Stützbilder" bezeichnet. Ebenso wie P-Bilder werden auch B-Bilder in Form von quantisierten Transformationskoeffizienten eines Differenzbildes codiert.

Ferner ist es bekannt, insbesondere zur Darstellung mittels Fernsehgeraten nach der PAL- oder NTSC-Norm, die Wiedergabe von Videobildern nicht als sogenanntes Vollbild sondern als zwei aufeinander folgende sogenannte Halbbilder vorzunehmen ("interlaced format"). Ein Vollbild weist das gesamte darzustellende Videobild auf und damit sämtliche Zeilen dieses Bildes. Vollbilder werden auch als "frames" bezeichnet. Dagegen weist jedes der beiden Halbbilder ("field") nur jeweils die Hälfte aller Zeilen eines Videobildes auf. Beim sogenannten "Top-Field" oder erstem Halbbild handelt es sich um alle geradzahligen Zeilen, beim "Bottom-Field" oder zweitem Halbbild um alle ungeradzahligen Zeilen des zugehörigen Vollbildes.

Ein MPEG-Decoder muß also nicht nur die codierten Videobilder in der richtigen Reihenfolge decodieren, sondern auch, sofern z.B. eine Darstellung für Fernsehgeräte nach der PAL- oder NTSC-Norm vorgesehen ist, für eine Bereitstellung der hierfür notwendigen beiden Halbbilder sorgen. Die übertragenen Videobilder können jedoch entweder Frame- oder Field-codiert sein. Im erstgenannten Fall sind die übertragenen Videobilder Vollbilder, im zweitgenannten Fall Halbbilder, wobei jeweils zwei von diesen wieder ein darzustellendes Vollbild bilden.

MPEG-Decoder weisen Speichermittel zum Speichern von zuvor decodierten Stützbildern auf. Das Speichern dieser I- oder P-Bilder ist notwendig, da sie Basis einer zeitlichen Prädiktion eines P- oder B-Bildes sind und somit für dessen Decodierung benötigt werden. Soll z.B. ein vom Decoder empfangenes, codiertes B-Bild verarbeitet werden, findet eine Decodierung des B-Bildes unter Zuhilfenahme der beiden für seine bidirektionale Prädiktion verwendeten, vom Decoder zuvor empfangenen und gespeicherten Stützbilder statt.

Weiterhin ist es bekannt, die für die Decodierung eines B-Bildes notwendigen Stützbilder nicht decodiert, sondern in codierter Form im Decoder zu speichern, um auf diese Art Speicherplatz zu sparen. Allerdings hat diese Methode den Nachteil, daß sich der durch den Decoder zu bewältigende Datendurchsatz stark erhöht. Dieselben I- und P-Bilder dienen nämlich im allgemeinen zur Decodierung einer Vielzahl von B-Bildern, so daß sie entsprechend häufig decodiert werden müssen. Noch entscheidender ist jedoch, daß nach MPEG eine blockbasierte Codierung vorgesehen ist, wobei die für die Prädiktion herangezogenen Prädiktionsbereiche in den Stützbildern häufig von den Blockgrenzen abweichen. Daher müssen zur Decodierung eines Blockes aus einem B-Bild u.U. je vier Blöcke der beiden codiert gespeicherten Stützbilder decodiert werden. Es wird somit ein achtfacher Datendurchsatz gegenüber dem Fall der Speicherung decodierter Stützbilder notwendig. Diese achfache Datenmenge muß aber nach wie vor in derselben Zeiteinheit bewältigt werden, die insgesamt für die Decodierung des prädiziert codierten Bildes zur Verfügung steht. Die Anforderungen an die Leistungsfähigkeit des Decoders sind also beträchtlich größer als im Falle decodiert gespeicherter Stützbilder.

In herkömmlichen MPEG-Decodern ist weiterhin ein Speichermittel vorgesehen, in dem das decodierte B-Bild gespeichert wird ("Ausgangs-Framepuffer"). Dieses Speichermittel ist im Falle eines Frame-codierten B-Bildes bei den herkömmlichen Decodern notwendig, da, wie bereits erwähnt, durch den Decoder aus dem Vollbild zwei Halbbilder zu erzeugen sind, die zur Darstellung des Vollbildes im Interlaced Format nacheinander an einem Ausgang des Decoders anliegen müssen. Der Ausgangs-Framepuffer ist im Falle von Field-codierten B-Bildern aber auch noch aus einem anderen Grunde notwendig: Bei manchen Anwendungen kann es notwendig sein (beispielsweise zur Anpassung unterschiedlicher Bildfrequenzen zwischen Aufnahmesystem und Wiedergabesystem), daß zur Darstellung eines Vollbildes nicht nur zwei Halbbilder dargestellt werden, sondern daß nach der Darstellung des zweiten Halbbildes noch einmal das erste Halbbild wiederholt wird.

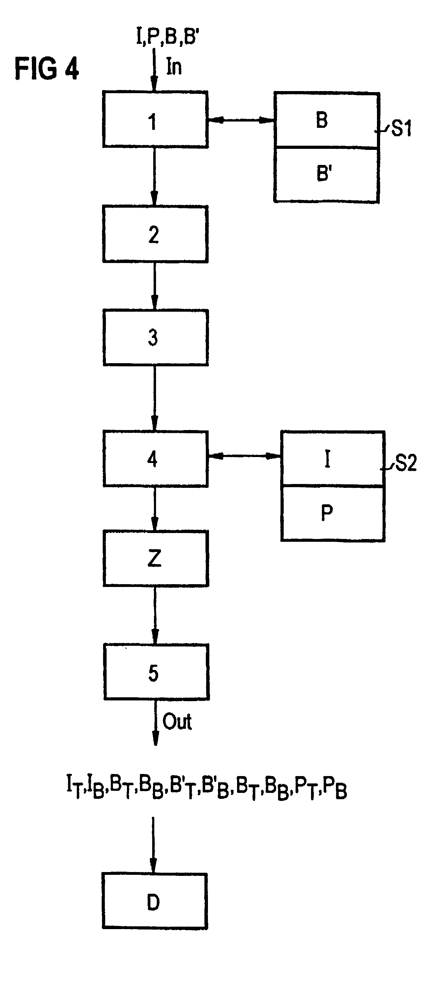

EP-A-0600446 offenbart einen Dekoder für ein komprimiertes digitales Videosignal unter Verwendung eines gemeinsamen Speichers. Abb. 4 offenbart, daß ein im Speicher (40) abgelegtes, komprimiertes Bild bei der inversen diskreten Kosinustransformation (IDCT 43) dekodiert wird. Dieses bereits dekodierte Bild wird wiederholt ausgegeben und ggf. nach Addition (44) von eingespeicherten Bilddaten (45) auf einem Bildschirm (13) dargestellt.

Der Erfindung liegt die Aufgabe zugrunde, einen Videodecoder anzugeben, bei dem der Speicherbedarf gering ist.

Diese Aufgabe wird durch einen Decoder gemäß Anspruch 1 und ein Decodierungsverfahren gemäß Anspruch 7 gelost.

Erfindungsgemäß ist vorgesehen, das erste Bild nicht decodiert (wie beim Stand der Technik), sondern in codierter Form im Decoder zu speichern. Zur Erzeugung der für die Wiedergabe notwendigen Halbbilder erfolgt eine mindestens zweifache Decodierung. Nach jeder Decodierung erfolgt eine Ausgabe des Decodierungsergebnisses an einen Ausgang des Decoders, um es (beispielsweise mittels eines Fernsehgerätes) wiederzugeben. Ein Ausgangs-Framepuffer, wie beim Stand der Technik, ist nicht notwendig. Zum Speichern des codierten ersten Bildes ist weniger Speicherplatz notwendig, als wenn es decodiert gespeichert würde, wie es beim Stand der Technik der Fall ist. Die Erfindung ist nicht auf den Fall von MPEG-Decodern beschränkt. Sie bezieht sich auf alle Fälle, wo aus einem ersten Bild für die Wiedergabe mehrfach Informationen generiert werden müssen. Im Unterschied zum Stand der Technik wird das gespeicherte, codierte erste Bild zur Erzeugung der unterschiedlichen Informationen (z.B. zwei Halbbilder aus einem Vollbild) jedesmal neu decodiert (wobei das Bild u.U. jedesmal nur teilweise und nicht vollständig decodiert werden muß). Beim Stand der Technik erfolgt zunächst eine vollständige Decodierung des Bildes, welches gespeichert und anschließend mehrfach ausgegeben wird (z.B. Ausgabe der beiden Halbbilder eines decodierten Vollbildes). Die Erfindung ist auch auf Decodierverfahren anwendbar, bei denen keine zeitliche Prädizierung vorgenommen wird und keine Stützbilder vorgesehen sind.

Eine Weiterbildung der Erfindung betrifft einen Videodecoder nach dem MPEG-Standard und sieht vor, daß das erste Bild zeitlich auf ein zweites Bild prädiziert ist, selbst aber nicht für die Decodierung eines anderen Bildes benötigt wird (d.h. es dient nicht der zeitlichen Prädiktion eines anderen Bildes und muß daher nicht für die Decodierung eines anderen Bildes decodiert werden). Es kann sich bei einem solchen ersten Bild beispielsweise um ein P- oder B-Bild handeln.

Gegenüber demjenigen Stand der Technik, bei dem ein Speichern der codierten Stützbilder (nämlich I- und/oder P-Bilder) vorgesehen ist, weist die Erfindung den Vorteil auf, daß eine weitaus geringere Datenmenge decodiert werden muß. Dies hat folgende Gründe: Beim genannten Stand der Technik müssen vor der Decodierung eines B-Bildes die codiert gespeicherten I-und P-Bilder, die dessen zeitlicher Pradiktion zugrundeliegen, zunächst decodiert werden. Diese Decodierung der I- und P-Bilder muß für jedes zu decodierende B-Bild erneut vorgenommen werden. Hierdurch ergibt sich eine Vervielfachung der vom Decoder zu decodierenden Daten.

Bei der Erfindung dagegen kann sich im schlechtesten Fall eine Verdoppelung der zu decodierenden Datenmenge ergeben, wenn nämlich der Fall eines Frame-codierten B-Bildes als erstes Bild betrachtet wird, bei denen erfindungsgemäß eine erste Decodierung zur Erzeugung des ersten Halbbildes und eine zweite Decodierung zur Erzeugung des zweiten Halbbildes aus dem codierten Vollbild erfolgt. In vorteihafter Weise kann aber diese Verdoppelung der zu decodierenden Datenmenge vermieden werden, da zur Gewinnung eines Halbbildes aus einem codierten Vollbild größtenteils eine Beschränkung auf die Decodierung der für das zu erzeugende Halbbild relevanten Zeilen erfolgen kann. Dies gilt beispielsweise für die Bewegungskompensation, aber auch für die meisten Fälle der inversen Quantisierung und inversen DCT.

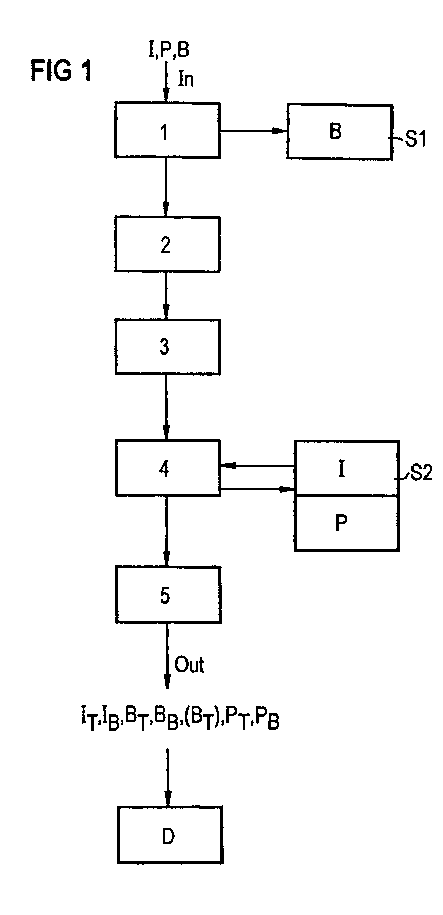

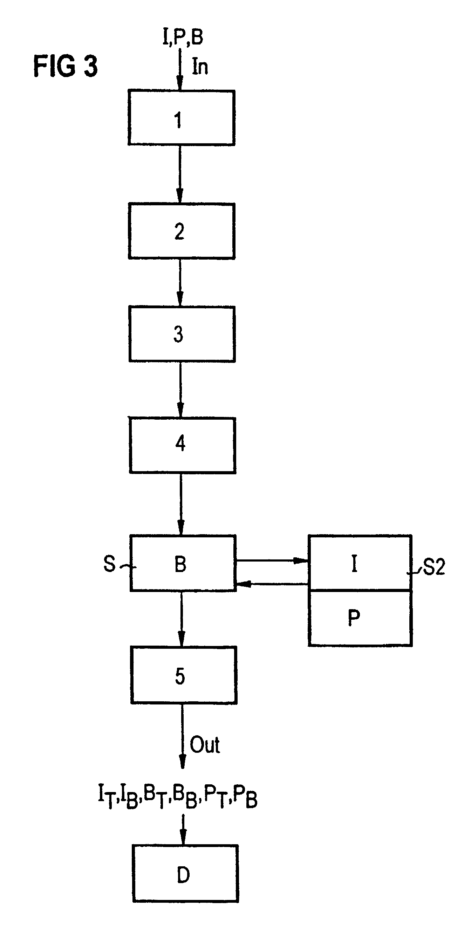

Die Erfindung wird im folgenden anhand der Zeichnungen erläutert. Die Figuren 1, 2 und 4 zeigen unterschiedliche Ausführungsbeispiele der Erfindung. Figur 3 zeigt den Aufbau eines herkömmlichen MPEG-Decoders, der hier zunächst erläutert wird.

An einen Eingang In des herkömmlichen Decoders für Videobilder aus Figur 3 werden nacheinander ein codiertes zweites Bild I, ein codiertes drittes Bild P und ein codiertes erstes Bild B gelegt. Dies entspricht der Reihenfolge bei der Datenübertragung, nicht der Reihenfolge für die Aufnahme bzw. Wiedergabe, und ist durch die Art der Codierung bedingt. Angenommenermaßen soll das erste Bild B ein B-Bild, das zweite Bild I ein I-Bild und das dritte Bild P ein P-Bild sein.

Das jeweils gerade anliegende codierte Bild wird in einem Eingangspuffer 1 zwischengespeichert und anschließend einer Entropiedecodierung 2, einer inversen Quantisierung und einer inversen DCT (Diskrete Cosinus Transformation) 3 und, sofern das jeweilige Bild zeitlich prädiziert ist, einer Bewegungskompensation 4 unterzogen.

Einem Ausgang Out des Decoders ist eine Nachverarbeitungseinheit 5 (Post Processing) vorgeschaltet, die die - im vorliegenden Fall angenommenermaßen - Frame-codierten Bilder I, P, B als Halbbilder I_{T}, I_{B} bzw. B_{T}, B_{B} bzw. P_{T}, P_{B} im Interlaced Format ausgibt. Das zweite Bild I und das dritte Bild P, welche für die Decodierung des ersten Bildes B als Stützbilder notwendig sind, werden decodiert in einem zweiten Speichermittel S2 gespeichert, während das decodierte erste Bild B in einem Ausgangs-Framepuffer S für die nachfolgende Zerlegung in die beiden Halbbilder B_{T}, B_{B} gespeichert wird.

Die durch den Decoder decodierten Bilder am Ausgang Out sind anschließend für eine Wiedergabe an ein Wiedergabegerät D gebbar.

Beim Stand der Technik kann es auch vorgesehen sein, die Stützbilder I, P im codierten Zustand zu speichern und sie für jede durchzuführende Decodierung eines auf sie zeitlich prädizierten B-Bildes zu decodieren.

Figur 1 zeigt ein erstes Ausführungsbeispiel der Erfindung. Wie der bereits beim Stand der Technik bekannte Decoder in Figur 3 weist der erfindungsgemäße Decoder einen Eingangspuffer 1, einen Entropiedecoder 2, eine Einheit 3 zur Durchführung der inversen Quantisierung und der inversen DCT, ein Mittel zur Bewegungskompensation 4 und eine Nachverarbeitungseinheit 5 (Post Processing) sowie ein zweites Speichermittel S2 zum Speichern eines decodierten zweiten Bildes I und eines dritten Bildes P auf, die als Stützbilder für eine nachfolgende Decodierung dienen. Bei diesem Ausführungsbeispiel wird angenommen, daß das zweite Bild I ein I-Bild ist und das dritte Bild P ein P-Bild ist, das bezüglich des zweiten Bildes I zeitlich prädiziert ist.

An einen Eingang In des Decoders werden nacheinander das codierte zweite Bild I, das codierte dritte Bild P und ein erstes Bild B (in diesem Fall ein B-Bild, welches bezüglich der beiden vorhergehenden Stützbilder I, P zeitlich bidirektional prädiziert ist) angelegt. Während das zweite Bild I und das dritte Bild P in bekannter Weise decodiert und im zweiten Speichermittel S2 abgelegt werden, wird das erste Bild B zunächst in einem ersten Speichermittel S1 in codierter Form gespeichert.

An einem Ausgang Out des Decoders sind die Halbbilder I_{T}, I_{B}, B_{T}, B_{B}, P_{T}, P_{B} des I-Bildes I, des B-Bildes B und P-Bildes P angegeben, wie sie für eine nachfolgende Darstellung, z.B. auf einem Fernsehgerät, im Interlaced Format in dieser Reihenfolge durch den Decoder erzeugt werden. Die Übertragung der codierten Bilder I, P, B in einer anderen Reihenfolge, als es für die Wiedergabe (am Ausgang Out des Decoders) notwendig ist, folgt aus dem Prinzip der bidirektionalen Prädizierung und ist vom Stand der Technik her bekannt.

Das bei diesem Ausführungsbeispiel Frame-codierte, also ein Vollbild darstellende, erste Bild B, welches im ersten Speichermittel S1 gespeichert ist, wird nun zur Erzeugung jedes der beiden Halbbilder B_{T}, B_{B} mittels der Stützbilder I, P jeweils einmal decodiert. Unter Umstanden kann beispielsweise auch eine dreifache Decodierung notwendig sein, wenn namlich im Anschluß an die Erzeugung des zweiten Halbbildes B_{B} noch einmal das erste Halbbild B_{T} für die Wiedergabe der übertragenen Videobilder notwendig ist (in Figur 1 wurde die zweite übertragung des ersten Halbbildes B_{T} an den Ausgang Out durch In-Klammer-Setzen angedeutet).

Der Figur 1 ist zu entnehmen, daß zwischen den Decodierungsstufen 1 bis 4 und dem Ausgang Out des Decoders kein weiteres Speichermittel zum Speichern des decodierten ersten Bildes B oder der daraus erzeugten Halbbilder B_{T}, B_{B} vorgesehen ist, so daß letztere ohne Zwischenspeichern direkt an den Ausgang Out gebbar sind. Es entfällt somit der Ausgangs-Framepuffer S des Standes der Technik, siehe Figur 3.

Nach dem MPEG-Standard ist es üblich, Bilder zerlegt in sogenannte Makroblöcke (das sind z.B. sechs Blöcke à 8x8 Pixel) zu übertragen. Dies hat zur Folge, daß bei der Decodierung erst sogenannte Makroblockzeilen - dies sind Gruppen von z.B. je 16 Bildzeilen - anstelle der einzelnen Bildzeilen erzeugt werden. Die Ausgabe aus dem Decoder für eine anschließende Darstellung muß jedoch zeilenweise geschehen. Um dieses "blockorientierte" Format in ein "zeilenorientiertes" Format umzuwandeln, muß für die Anwendung der Erfindung ein kleiner Zwischenspeicher an der Stelle vorgesehen werden, wo beim Stand der Technik der Ausgangs-Framepuffer S (Figur 3) angeordnet ist. Im Gegensatz zum Stand der Technik dient der Zwischenspeicher jedoch nur der Aufnahme einer jeweils decodierten Makroblockzeile (z.B. 16 Bildzeilen) und nicht des gesamten zu decodierenden Halboder Vollbildes (z.B. 288 bzw. 576 Bildzeilen) und ist daher viel kleiner als ein Ausgangs-Framepuffer. Nachdem die gesamte Makroblockzeile decodiert und im Zwischenspeicher abgelegt worden ist, kann die für die Wiedergabe notwendige zeilenmäßige Ausgabe erfolgen. Um eine unterbrechungsfreie Ausgabe von decodierten Bildzeilen zu erreichen, ist es sinnvoll, den Zwischenspeicher so zu dimensionieren, daß er zwei Makroblockzeilen (insgesamt z.B. 32 Bildzeilen) aufnehmen kann. Nach der Decodierung einer Makroblockzeile kann dann diese bildzeilenweise ausgegeben werden, während gleichzeitig eine weitere Makroblockzeile decodiert wird und die dabei erzeugten Daten laufend ebenfalls im Zwischenspeicher abgelegt werden, ohne daß die vorhergehende Makroblockzeile überschrieben wird.

Das erste Speichermittel S1 kann vorteilhafterweise Teil des Eingangspuffers 1 sein, so daß dieser gegenüber dem Stand der Technik nur entsprechend größer dimensioniert werden muß, um neben dem zu speichernden ersten Bild B noch die während seiner Speicherung am Eingang In des Decoders eintreffenden Bilder aufnehmen zu können. Im Gegensatz zum Stand der Technik (Figur 3) ist bei der Erfindung kein Ausgangs-Framepuffer S notwendig, in dem das decodierte erste Bild B gespeichert wird. Das erste Speichermittel S1 (zuzüglich des eventuell erforderlichen, im vorausgegangenen Absatz bereits erwähnten Zwischenspeichers) kann kleiner dimensioniert sein, als der Ausgangsframepuffer S beim Stand der Technik.

Vorteilhafterweise kann die Erzeugung der Halbbilder B_{T}, B_{B} aus dem ersten Vollbild B in der Weise geschehen, daß in beiden Fallen nicht das gesamte erste Bild B decodiert wird, sondern nur die für die Halbbilder notwendigen Zeilen. Hierdurch kann die zu decodierende Datenmenge deutlich reduziert werden.

Alternativ zum dargestellten Ausführungsbeispiel kann es vorgesehen sein, zusätzlich zum ersten Bild B auch die Stützbilder I, P nicht decodiert, sondern ebenfalls codiert zu speichern. Dann besteht innerhalb des Decoders insgesamt ein noch geringerer Speicherbedarf, wobei allerdings der Decodierungsaufwand pro Zeiteinheit zunimmt.

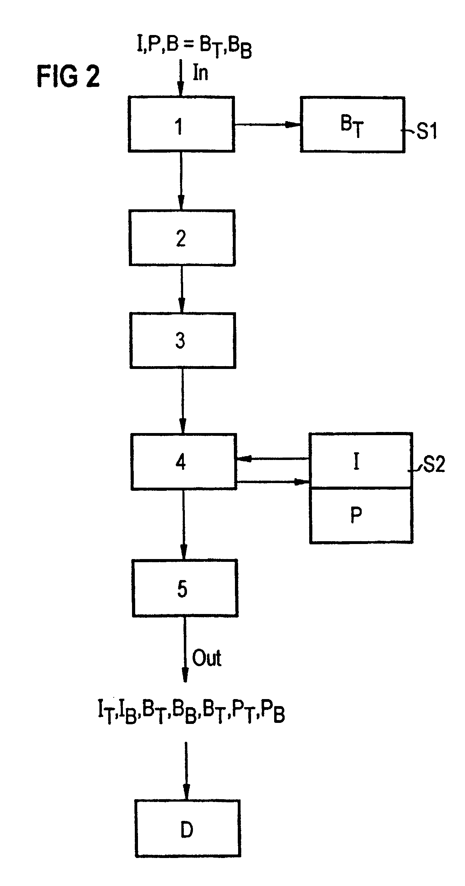

Figur 2 zeigt ein zweites Ausführungsbeispiel der Erfindung, welches sich von demjenigen in Figur 1 dadurch unterscheidet, daß das erste Bild B (auch in diesem Fall ein B-Bild) kein Vollbild, sondern ein erstes Halbbild B_{T} ist, welches mit einem zusätzlich übertragenen zweiten Halbbild B_{B} ein Field-codiertes Vollbild bilden, im Gegensatz zum Frame-codierten B-Bild B in Figur 1. Beide Halbbilder B_{T}, B_{B} sind B-Bilder und bezüglich der Stützbilder I, P zeitlich prädiziert.

Beim in Figur 2 dargestellten Decoder wird das erste Halbbild B_{T} im ersten Speichermittel S1 codiert gespeichert, da es, wie bereits erläutert, notwendig sein kann, nach der Ausgabe des zweiten Teilbildes B_{B} am Ausgang Out wiederum das erste Teilbild B_{T} auszugeben. Zu diesem Zwecke wird das zuerst empfangene zweite Bild I (ein I-Bild) decodiert und im zweiten Speichermittel S2 gespeichert, gleichzeitig in zwei Halbbilder I_{T}, I_{B} zerlegt und in dieser Reihenfolge an den Ausgang Out gegeben. Das als nächstes am Eingang In anliegende dritte Bild P wird decodiert und ebenfalls im zweiten Speichermittel S2 gespeichert. Das daraufhin am Eingang In empfangene, codierte erste Teilbild B_{T} wird im ersten Speichermittel S1 gespeichert und gleichzeitig unter Zuhilfenahme des zweiten Bildes I und des dritten Bildes P, die im zweiten Speichermittel S2 gespeichert sind, decodiert und dann an den Ausgang Out gegeben. Anschließend geschieht, bis auf das Speichern im ersten Speichermittel S1, das gleiche mit dem zweiten Halbbild B_{B}. Daraufhin wird nochmals das im ersten Speichermittel S1 gespeicherte erste Halbbild B_{T} decodiert und ausgegeben, woraufhin abschließend das im zweiten Speichermittel S2 gespeicherte dritte Bild P in Halbbilder P_{T}, P_{B} zerlegt und ausgegeben wird.

Es wird nochmals darauf hingewiesen, daß bei blockorientierten Verfahren wie MPEG ein relativ kleiner Zwischenspeicher zur Aufnahme zweier Makroblockzeilen zwischen der Bewegungskompensation 4 und der Nachverarbeitungseinheit 5 angeordnet sein muß, um anstelle der decodierten Makroblockzeilen einzelne Bildzeilen ausgeben zu können.

Bei alternativen Ausführungsformen der Erfindung kann natürlich auch vorgesehen sein, als zweites Bild I kein I-Bild sondern ebenfalls ein P-Bild vorzusehen, da es allgemein bekannt ist, B-Bilder sowohl bezüglich I-Bildern als auch P-Bildern zu pradizieren. Das gleiche gilt für den Fall, das beide im ersten Speichermittel zu speichernden Stützbilder I-Bilder sind.

Ferner ist es möglich, daß das zweite Bild I (als I- oder P-Bild) als einziges Stützbild im zweiten Speichermittel S2 abgelegt wird (dieser kann dann entsprechend kleiner dimensioniert werden als bei den Ausführungsbeispielen in Figur 1 und 2) und daß das erste Bild B ein vorwärtsprädiziertes P-Bild ist, welches bezüglich des zweiten Bildes I codiert wurde, selbst aber nicht für eine Prädizierung herangezogen wird (dies entspricht allerdings nicht dem MPEG-Standard).

Selbstverständlich ist es auch möglich, daß die in den Figuren 1 und 2 als Vollbilder angenommenen codierten Bilder I und P Halbbilder sind oder als Halbbilder codiert sind, jedoch im zweiten Speichermittel als Vollbilder gespeichert werden.

Figur 4 zeigt ein weiteres Ausführungsbeispiel der Erfindung. Es handelt sich hier um einen MPEG-Decoder, die Erfindung ist aber wohlgemerkt nicht nur auf solche beschränkt. In Figur 4 liegen am Eingang In nacheinander außer zwei Stützbildern I, P zwei B-Bilder, nämlich ein erstes Bild B und ein viertes Bild B' an. Es ist angenommen, daß alle Bilder I, P, B, B' frame-codiert, also Vollbilder, sind. Bei diesem Ausführungsbeispiel werden die beiden B-Bilder B, B' im ersten Speichermittel S1 gespeichert. Es ist dann durch mehrfache Decodierung dieser beiden Bilder B, B' beispielsweise möglich, die am Ausgang Out dargestellten Halbbilder in der angegebenen Reihenfolge zu erzeugen. Beim vorliegenden Fall wird zur Erzeugung der beiden jeweiligen Halbbilder zunächst das erste Bild B zweimal decodiert, dann das vierte Bild B' zweimal decodiert und anschließend wieder das erste Bild B zweimal decodiert. Es sind auch andere zeitliche Reihenfolgen erzielbar, die insgesamt davon abhängig sind, in welcher Form eine Wiedergabe mittels des Wiedergabegerätes D erfolgen soll.

In Figur 4 ist der bereits mehrfach erwähnte Zwischenspeicher Z zwischen der Bewegungskompensation 4 und der Nachverarbeitungseinheit 5 eingezeichnet. Er ist nur bei blockorientierten Codierungsverfahren notwendig und kann bei einem MPEG-Decoder sinnvollerweise zwei Makroblockzeilen aufnehmen. Damit ist er wesentlich kleiner, als ein Ausgangs-Framepuffer S nach Figur 3. Erfolgt die Codierung bzw. Decodierung nicht block-, sondern zeilenorientiert, ist der Zwischenspeicher Z nicht notwendig. Die jeweils decodierten Bilder können dann direkt zeilenweise ausgegeben werden.

Es ist möglich, daß der erfindungsgemäße Decoder Bestandteil eines entsprechenden Encoders ist, in dem die Bewegungsschätzung für die Codierung der zu übertragenden Videobilder durchgeführt wird. MPEG-Encoder enthalten grundsätzlich auch einen Decoder für die zeitliche Prädiktion.

Die Erfindung ist besonders vorteilhaft auf alle Videobilder anwendbar, die keine Basis für eine zeitliche Prädizierung eines anderen Bildes sind. Dies betrifft also nicht nur die in den beiden Ausführungsbeispielen der Figuren 1 und 2 dargestellten ersten Bilder B, die angenommenermaßen als B-Bilder zeitlich bidirektional prädiziert sind, sondern (außer zeitlich unidirektional prädizierten P-Bildern) auch zeitlich nicht prädizierte Bilder, wie z.B. I-Bilder.

## Patentansprüche

1. Videodecoder
- mit einem ersten Speichermittel (S1) zum Speichern eines kompressionscodierten ersten Bildes (B),
- und mit einer Decodiereinrichtung (2, 3, 4)
-- zur Durchführung einer ersten Decodierung des gespeicherten ersten Bildes (B) mit anschließender Ausgabe des Ergebnisses an einen Ausgang (OUT) für eine Wiedergabe mittels eines Wiedergabegerätes (D),
-- und zur Durchführung einer zeitlich nachfolgenden zweiten Decodierung des gespeicherten ersten Bildes (B) mit anschließender Ausgabe des Ergebnisses an den Ausgang (OUT).

2. Videodecoder nach Anspruch 1,
- bei dem das codierte erste Bild (B) bezüglich eines zweiten Bildes (I) zeitlich prädiziert ist, selbst aber keiner zeitlichen Prädiktion eines anderen codierten Bildes dient,
- der ein zweites Speichermittel (S2) zum Speichern des zweiten Bildes (I) aufweist,
- und dessen Decodiereinrichtung das gespeicherte erste Bild (B) jeweils unter Zuhilfenahme des gespeicherten zweiten Bildes (I) decodiert.

3. Videodecoder nach einem der vorstehenden Ansprüche,
- bei dem das erste Bild (B) ein Vollbild ist,
- und dessen Decodiereinrichtung dazu dient, aus dem ersten Bild (B) durch die erste Decodierung ein erstes Halbbild (B_{T}) und durch die zweite Decodierung ein zweites Halbbild (B_{B}) zu erzeugen.

4. Videodecoder nach Anspruch 3,
dessen Decodiereinrichtung dazu dient, nach der zweiten Decodierung durch eine dritte Decodierung des gespeicherten ersten Bildes (B) wiederum das erste Halbbild (B_{T}) zu erzeugen und an den Ausgang auszugeben.

5. Videodecoder nach einem der Ansprüche 1 oder 2,
- bei dem das codierte erste Bild (B) ein erstes Halbbild (B_{T}) ist,
- und dessen Decodiereinrichtung dazu dient, durch aufeinander folgende Decodierungen nacheinander
-- das gespeicherte erste Halbbild (B_{T}),
-- ein codiertes zweites Halbbild (B_{B}) und
-- erneut das gespeicherte erste Halbbild (B_{T}) zu erzeugen.

6. Videodecoder nach einem der vorstehenden Ansprüche,
- dessen erstes Speichermittel (S1) zusätzlich zum ersten Bild (B) auch zum Speichern eines vierten kompressionscodierten Bildes (B') dient,
- dessen Decodiereinrichtung dazu dient, das gespeicherte vierte Bild ebenfalls mehrmals zu decodieren und die Ergebnisse der Decodierungen jeweils an den Ausgang (Out) zu geben.

7. Verfahren zum Decodieren eines kompressionscodierten ersten Bildes (B),
- bei dem das codierte erste Bild (B) gespeichert wird,
- bei dem das gespeicherte erste Bild (B) dekodiert und das Ergebnis der Decodierung für eine Wiedergabe mittels eines Wiedergabegerätes (D) an einen Ausgang (OUT) des Decoders gegeben wird
- und bei dem das gespeicherte erste Bild (B) ein zweites Mal dekodiert und das Ergebnis an den Ausgang (OUT) gegeben wird.

8. Verfahren nach Anspruch 7,
- bei dem das codierte erste Bild (B) bezüglich eines zweiten Bildes (I) zeitlich prädiziert ist, selbst aber keiner zeitlichen Prädiktion eines anderen codierten Bildes dient,
- bei dem das zweite Bild (I) gespeichert wird,
- und bei dem das Decodieren des ersten Bildes (B) jeweils unter Zuhilfenahme des gespeicherten zweiten Bildes (I) erfolgt.

## Claims

1. Videodecoder
- having a first storage means (S1) for storing a compression-coded first picture (B),
- and having a decoding device (2, 3, 4)
-- for carrying out a first decoding of the stored first picture (B) with subsequent outputting of the result to an output (OUT) for reproduction by means of a reproduction device (D),
-- and for carrying out a temporally succeeding second decoding of the stored first picture (B) with subsequent outputting of the result to the output (OUT).

2. Videodecoder according to Claim 1,
- in which the coded first picture (B) is temporally predicted with respect to a second picture (I) but does not itself serve for temporal prediction of another coded picture,
- which has a second storage means (S2) for storing the second picture (I),
- and whose decoding device decodes the stored first picture (B) in each case with the assistance of the stored second picture (I).

3. Videodecoder according to one of the preceding claims,
- in which the first picture (B) is a frame,
- and whose decoding device serves to generate, from the first picture (B), a first field (B_{T}) by means of the first decoding and a second field (B_{B}) by means of the second decoding.

4. Videodecoder according to Claim 3,
whose decoding device serves to generate the first field (B_{T}) again, after the second decoding, by means of a third decoding of the stored first picture (B), and to output it to the output.

5. Videodecoder according to either of Claims 1 and 2,
- in which the coded first picture (B) is a first field (B_{T}),
- and whose decoding device serves to successively generate, by successive decodings,
-- the stored first field (B_{T}),
-- a coded second field (B_{B}), and
-- the stored first field (B_{T}) again.

6. Videodecoder according to one of the preceding claims,
- whose first storage means (S1), in addition to the first picture (B) also serves to store a fourth compression-coded picture (B'),
- whose decoding device serves to decode the stored fourth picture likewise a number of times and to pass the results of the decodings in each case to the output (Out).

7. Process for decoding a compression-coded first picture (B),
- in which the coded first picture (B) is stored,
- in which the stored first picture (B) is decoded and the result of the decoding is passed to an output (OUT) of the decoder for reproduction by means of a reproduction device (D),
- and in which the stored first picture (B) is decoded a second time and the result is passed to the output (OUT).

8. Process according to Claim 7,
- in which the coded first picture (B) is temporally predicted with respect to a second picture (I) but does not itself serve for temporal prediction of another coded picture,
- in which the second picture (I) is stored,
- and in which the decoding of the first picture (B) is in each case effected with the assistance of the stored second picture (I).

## Revendications

1. Décodeur vidéo comportant
- un premier moyen de mémorisation (S1) pour mémoriser une première image (B) codée par compression,
- et un dispositif décodeur (2, 3, 4)
-- pour mettre en oeuvre un premier décodage de la première image mémorisée (B) avec ensuite une délivrance du résultat à une sortie (Out) en vue d'une reproduction au moyen d'un appareil de reproduction (D),
-- et pour mettre en oeuvre un deuxième décodage, temporellement suivant, de la première image mémorisée (B) avec ensuite une délivrance du résultat à la sortie (OUT).

2. Décodeur vidéo selon la revendication 1,
- dans lequel la première image codée (B) est prédite temporellement par rapport à une deuxième image (I) mais ne sert pas elle-même à une prédiction temporelle d'une autre image codée,
- qui comporte un deuxième moyen de mémorisation (S2) pour mémoriser la deuxième image (I),
- et dont le dispositif décodeur décode la première image mémorisée (B) chaque fois à l'aide de la deuxième image mémorisée (I).

3. Décodeur vidéo selon l'une des revendications précédentes,
- dans lequel la première image (B) est une image complète
- et dont le dispositif décodeur sert à produire à partir de la première image (B) par le premier décodage une première trame (B_{T}) et par le deuxième décodage une deuxième trame (B_{B}).

4. Décodeur vidéo selon la revendication 3,
dont le dispositif décodeur sert, après le deuxième décodage, à produire par un troisième décodage de la première image mémorisée (B) de nouveau la première trame (B_{T}) et à la délivrer à la sortie.

5. Décodeur vidéo selon l'une des revendications 1 ou 2,
- dans lequel la première image codée (B) est une première trame (B_{T})
- et dont le dispositif décodeur sert à produire les unes après les autres par des décodages successifs
-- la première trame mémorisée (B_{T}),
-- une deuxième trame codée (B_{B}) et
-- de nouveau la première trame mémorisée (B_{T}).

6. Décodeur vidéo selon l'une des revendications précédentes,
- dont le premier moyen de mémorisation (S1) sert à mémoriser non seulement la première image (B) mais aussi une quatrième image (B') codée par compression,
- dont le dispositif décodeur sert à décoder également plusieurs fois la quatrième image mémorisée et à délivrer les résultats des décodages chaque fois à la sortie (Out).

7. Procédé pour le décodage d'une première image (B) codée par compression, dans lequel
- on mémorise la première image codée (B),
- on décode la première image mémorisée (B) et on délivre le résultat du décodage à une sortie (OUT) du décodeur en vue d'une reproduction au moyen d'un appareil de reproduction (D)
- et on décode une deuxième fois la première image mémorisée (B) et on délivre le résultat à la sortie (OUT).

8. Procédé selon la revendication 7, dans lequel
- on prédit temporellement par rapport à une deuxième image (I) la première image codée (B) mais celle-ci ne sert pas elle-même à une prédiction temporelle d'une autre image codée,
- on mémorise la deuxième image (I),
- et on effectue le décodage de la première image (B) chaque fois à l'aide de la deuxième image mémorisée (I).
